(19) Europäisches Patentamt
European Patent Office
Office européen des brevets

(11) **EP 2 615 296 A1**

(12) **EUROPÄISCHE PATENTANMELDUNG**

(43) Veröffentlichungstag:
**17.07.2013 Patentblatt 2013/29**

(51) Int Cl.:
*F02M 61/18* (2006.01)    *F02M 45/08* (2006.01)
*F02B 23/06* (2006.01)

(21) Anmeldenummer: **12151229.7**

(22) Anmeldetag: **16.01.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Ford Global Technologies, LLC Dearborn, MI 48126 (US)**

(72) Erfinder:
• **Willems, Werner 52076 Aachen (DE)**

• **Ruhland, Helmut 52249 Eschweiler (DE)**

(74) Vertreter: **Drömer, Hans-Carsten Henry-Ford Str. 1 50735 Köln (DE)**

Bemerkungen:
Geänderte Patentansprüche gemäss Regel 137(2) EPÜ.

(54) **Verfahren und Vorrichtung zum Einspritzen von Kraftstoff in eine Brennkammer eines Verbrennungsmotors**

(57)    Es wird ein Verfahren zum Einspritzen von Kraftstoff (21, 22) in eine Brennkammer (20) einer Verbrennungsmaschine offenbart, welche einen Kolben (2) und einen Zylinder (1) mit einer Mittelachse (4) umfaßt, wobei der Zylinder (1) eine Einspritzdüsenanordnung (3) mit einer Mittelachse (4), die der Mittelachse (4) des Zylinders (1) entspricht, umfaßt und die Einspritzdüsenanordnung (3) mindestens eine erste Einspritzdüse (9) und mindestens eine zweite Einspritzdüse (8) umfaßt. Ein erster Anteil Brennstoff (21) wird durch die erste Einspritzdüse (9) in die Brennkammer (20) in einer Einspritzrichtung (15) eingespritzt, die einen Winkel zwischen 55° und 69° zur Mittelachse (4) der Einspritzdüsenanordnung (3) aufweist. Gleichzeitig wird ein zweiter Anteil Brennstoff (22) durch die zweite Einspritzdüse (8) in die Brennkammer (20) in einer Einspritzrichtung (14) eingespritzt, die einen Winkel (13) zwischen 70° und 85° zur Mittelachse (4) der Einspritzdüsenanordnung (3) aufweist.

Fig. 1

EP 2 615 296 A1

**Beschreibung**

Die vorliegende Erfindung betrifft ein Verfahren zum Einspritzen von Kraftstoff in eine Brennkammer einer Verbrennungsmaschine, insbesondere eines Dieselmotors. Die Erfindung betrifft weiterhin eine Einspritzdüsenanordnung zur Durchführung des zuvor genannten Verfahrens und eine Verbrennungsmaschine mit einer entsprechenden Einspritzdüsenanordnung. Bei der Verbrennungsmaschine kann es sich beispielsweise um einen Motor, insbesondere einen Dieselmotor, handeln.

Um derzeitigen und zukünftigen Anforderungen an die maximal zulässigen Emissionen von Verbrennungsmaschinen, insbesondere die zulässigen $CO_2$-Emissionen, gerecht zu werden, ist es erforderlich Verbrennungskonzepte zu entwickeln, die den Brennstoff optimal, also unter möglichst geringer Schadstofferzeugung, verbrennen. In dem Dokument WO 00/71886 A1 wird ein Verfahren zum Einspritzen von Kraftstoff in den Brennraum einer Brennkraftmaschine, insbesondere zum Einspritzen von Dieselkraftstoff, beschrieben. Dabei sind über einer Einspritzdüse mehrere übereinander bzw. in Öffnungsrichtung der Einspritzdüse hintereinander angeordnete Lochreihen vorgesehen. Im Teillastbereich werden über wenigstens eine erste Reihe von Voreinspritzöffnungen Voreinspritzstrahlen mit verschiedenen Einspritzrichtungen und/oder Winkeln derart in den Brennraum eingespritzt, das eine weitgehend homogene Mischung aus Luft und Kraftstoff entsteht. Bei wenigstens annähernd Vollastbetrieb werden durch weitere über den Umfang verteilt angeordnete Haupteinspritzöffnungen Hauptstrahlen derart in den Brennraum eingespritzt, dass die Hauptstrahlen über den Umfang verteilt angeordnete Strahlenbündel ergeben, in die die Voreinspritzstrahlen weitgehend integriert werden.

Die zurzeit bekannten Dieselmotoren ermöglichen bereits relativ niedrige $CO_2$-Emissionen. Dennoch ist eine weitere Optimierung im Hinblick auf zukünftige Emissionsanforderungen dringend erforderlich. Dabei ist ein niedriger Kraftstoffverbrauch bei geringer Emissionsentwicklung wünschenswert, wobei gleichzeitig die Erforderlichkeit einer Abgasnachbehandlung beispielsweise durch Katalysatoren reduziert wird.

Es ist daher eine erste Aufgabe der vorliegenden Erfindung ein vorteilhaftes Verfahren zum Einspritzen von Kraftstoff in eine Brennkammer einer Verbrennungsmaschine zur Verfügung zu stellen. Eine zweite Aufgabe der vorliegenden Erfindung besteht darin, eine vorteilhafte Einspritzventilanordnung zur Verfügung zu stellen. Eine dritte Aufgabe der vorliegenden Erfindung besteht darin, eine vorteilhafte Verbrennungsmaschine zur Verfügung zu stellen.

Die erste Aufgabe wird durch ein Verfahren zum Einspritzen von Kraftstoff in eine Brennkammer einer Verbrennungsmaschine gemäß Anspruch 1 gelöst. Die zweite Aufgabe wird durch eine Einspritzdüsenanordnung gemäß Anspruch 8 gelöst. Die dritte Aufgabe wird durch eine Verbrennungsmaschine gemäß Anspruch 14 gelöst. Die abhängigen Ansprüche enthalten weitere, vorteilhafte Ausgestaltungen der vorliegenden Erfindung.

Das erfindungsgemäße Verfahren zum Einspritzen von Kraftstoff in eine Brennkammer einer Verbrennungsmaschine bezieht sich auf eine Verbrennungsmaschine, welche einen Kolben und einen Zylinder umfaßt. Der Zylinder umfaßt eine Mittelachse und eine Einspritzdüsenanordnung. Die Einspritzdüsenanordnung umfaßt ihrerseits eine Mittelachse, die der Mittelachse des Zylinders entspricht. Weiterhin umfaßt die Einspritzdüsenanordnung mindestens eine erste Einspritzdüse und mindestens eine zweite Einspritzdüse. Das erfindungsgemäße Verfahren ist dadurch gekennzeichnet, dass ein erster Anteil Brennstoff durch die mindestens eine erste Einspritzdüse in die Brennkammer in einer Einspritzrichtung eingespritzt wird, die einen Winkel zwischen 55° und 69° zur Mittelachse der Einspritzdüsenanordnung aufweist. Gleichzeitig wird ein zweiter Anteil Brennstoff durch die mindestens eine zweite Einspritzdüse in die Brennkammer in einer Einspritzrichtung eingespritzt, die einen Winkel zwischen 70° und 85° zur Mittelachse der Einspritzdüsenanordnung aufweist.

Vorteilhafterweise kann die Einspritzdüsenanordnung eine Anzahl erster Einspritzdüsen umfassen, die gleichmäßig und/oder symmetrisch um die Mittelachse der Einspritzdüsenanordnung herum angeordnet sind. Ebenfalls vorteilhafterweise kann die Einspritzdüsenanordnung eine Anzahl zweiter Einspritzdüsen umfassen, die gleichmäßig und/oder symmetrisch um die Mittelachse der Einspritzdüsenanordnung herum angeordnet sind. Es ist insbesondere günstig, wenn der erste Anteil Brennstoff durch die mindestens eine erste Einspritzdüse in die Brennkammer in einer Einspritzrichtung eingespritzt wird, die einen Winkel zwischen 60° und 65° zur Mittelachse der Einspritzdüsenanordnung aufweist, wobei gleichzeitig der zweite Anteil Brennstoff durch die mindestens eine zweite Einspritzdüse in die Brennkammer in einer Einspritzrichtung eingespritzt wird, die einen Winkel zwischen 70° und 80° zur Mittelachse der Einspritzdüsenanordnung aufweist.

Im Falle von zahlreichen ersten Einspritzdüsen und zahlreichen zweiten Einspritzdüsen kann auf diese Weise ein durch die ersten Einspritzdüsen erzeugter Brennstoffkegel mit einem Öffnungswinkel zwischen 120° und 135° und ein durch die zweiten Einspritzdüsen erzeugter Brennstoffkegel mit einem Öffnungswinkel zwischen 140° und 160° erzeugt werden. Im einfachsten Fall kann beispielsweise der erste Anteil Brennstoff durch mindestens zwei erste Einspritzdüsen in die Brennkammer eingespritzt werden, wobei die zwei ersten Einspritzdüsen in Bezug auf die Mittelachse der Einspritzdüsenanordnung einander derart gegenüber angeordnet sind, dass zwischen ihnen ein Einspritzwinkel zwischen 110° und 139°, vorteilhafterweise zwischen 120° und 135°, erzielt wird. Gleichzeitig kann der zweite Anteil Brennstoff durch mindestens zwei zweite Einspritzdüsen in die Brennkammer eingespritzt werden, wobei die zwei zweiten Einspritzdüsen in Bezug auf die Mittelachse der Einspritzdüsenanordnung einander derart gegenüber angeordnet sind, dass zwischen ihnen eine Einspritzwinkel zwischen 140° und 170°, vorteilhafterweise zwischen 140° und 160°, erzielt wird.

Im Rahmen der vorliegenden Erfindung wird also die sogenannte an der Brennkammerwand geführte Injektion des Brennstoffes (wall-guided injection) mit der Strahlgeführten Injektion (spray-guided injection) kombiniert. Dabei werden die Vorteile beider Injektionssystems bzw. Einspritzsysteme miteinander verbunden und eine ähnliche Verbrennungscharakteristik wie bei den konventionellen Systemen, die den Abgasnormen Euro5 bzw. Euro6 genügen, erzielt. Zusätzlich hat das vorliegende Verfahren jedoch den Vorteil, dass das so betriebene Verbrennungssystem über einen weiten Bereich bei lokal niedriger Verbrennungstemperatur (LTC - Low Temperature Combustion) betrieben werden kann.

Darüber hinaus kann ein mit dem erfindungsgemäßen Verfahren betriebenes Verbrennungssystem bzw. eine entsprechende Verbrennungsmaschine entweder in der konventionellen Form betrieben werden, also entsprechend den den derzeitigen Abgasnormen Euro4/5/6 entsprechenden Motoren betrieben werden, oder es kann in einem Betriebszustand betrieben werden, der den konventionellen Betrieb mit einem LTC-Betrieb verbindet. Dies wird dadurch erreicht, dass das vorliegende Verfahren unter der gleichzeitigen Verwendung von zwei Einspritzwinkeln, nämlich einem niedrigen Einspritzwinkel mit Hilfe der ersten Einspritzdüsen und einem hohen Einspritzwinkel mit Hilfe der zweiten Einspritzdüse, betrieben bzw. durchgeführt werden kann. Die dabei verwendete Brennkammer unterstützt vorzugsweise beide Einspritzwinkel.

Die vorliegende Erfindung ermöglicht also eine verringerte Rußbildung und eine im Vergleich zu konventionellen Verbrennungsverfahren verringerte Schadstoffemission, insbesondere eine verminderte Kohlendioxidemission.

Grundsätzlich kann der verwendete Kolben ebenfalls eine Mittelachse aufweisen, die mit der Mittelachse der Einspritzdüsenanordnung und/oder des Zylinders identisch sein kann.

Vorteilhafterweise kann der erste Anteil Brennstoff und/oder der zweite Anteil Brennstoff mit einer Drallzahl zwischen 0,8 bis 3 in die Brennkammer eingespritzt werden. Dies kann beispielsweise durch entsprechende Einspritzdüsenöffnungen realisiert werden. Unter der Drallzahl wird das Verhältnis von Umfangsgeschwindigkeit zur Axialgeschwindigkeit des Brennstoffes im Hinblick auf die Einspritzrichtung beim Verlassen der entsprechenden Einspritzdüse verstanden.

Weiterhin kann der erste Anteil Brennstoff und/oder der zweite Anteil Brennstoff bei einem Kompressionsverhältnis der Brennkammer zwischen 13 und 16 in die Brennkammer eingespritzt werden. Unter dem Kompressionsverhältnis bzw. Verdichtungsverhältnis $\varepsilon$ versteht man das Verhältnis des gesamten Zylinderraumes vor der Verdichtung zum verbliebenen Raum nach der Verdichtung:

$$\varepsilon = \frac{V_H + V_K}{V_K}$$

mit $V_H$ = Hubraum (Kolbenhub * Kolbenfläche) und $V_K$ = Kompressionsvolumen.

Grundsätzlich kann der erste Anteil Brennstoff und/oder der zweite Anteil Brennstoff durch eine Anzahl von Einspritzöffnungen, die entlang einer gedachten Kreislinie um die Mittelachse der Einspritzdüsenanordnung angeordnet sind, in die Brennkammer eingespritzt werden. Dabei können die entsprechenden Einspritzöffnungen gleichmäßig entlang des Umfanges der Kreislinie verteilt angeordnet sein. Die gedachte Kreislinie hat vorteilhafterweise einen Mittelpunkt, welcher auf der Mittelachse der Einspritzdüsenanordnung oder des Zylinders angeordnet ist. Es hat sich als vorteilhaft herausgestellt, wenn der erste Anteil des Brennstoffes durch zwischen 5 und 10 erste Düsenöffnungen in die Brennkammer eingespritzt wird und/oder der zweite Anteil des Brennstoffes durch zwischen 5 und 10 zweite Düsenöffnungen in die Brennkammer eingespritzt wird. Auf diese Weise wird eine gleichmäßige Verteilung des Brennstoffes um die Mittelachse des Zylinders und eine hohe Durchmischung zwischen dem Brennstoff und der in der Brennkammer befindlichen Luft erreicht.

Die erfindungsgemäße Einspritzdüsenanordnung ist zur Durchführung des zuvor beschriebenen Verfahrens geeignet. Sie umfaßt eine Mittelachse. Weiterhin umfaßt die erfindungsgemäße Einspritzdüsenanordnung mindestens eine erste Einspritzdüse mit einer Mittelachse, die in einem Winkel zwischen 55° und 69°, vorteilhafterweise zwischen 60° und 65°, zur Mittelachse der Einspritzdüsenanordnung angeordnet ist. Die erfindungsgemäße Einspritzdüsenanordnung umfaßt darüber hinaus mindestens eine zweite Einspritzdüse mit einer Mittelachse, die in einem Winkel zwischen 70° und 85°, vorteilhafterweise zwischen 70° und 80°, zur Mittelachse der Einspritzdüsenanordnung angeordnet ist.

Die erfindungsgemäße Einspritzdüsenanordnung hat grundsätzlich dieselben Vorteile wie das zuvor beschriebene erfindungsgemäße Verfahren. Insbesondere können eine Anzahl erster Einspritzdüsen und/oder eine Anzahl zweiter Einspritzdüsen gleichmäßig um die Mittelachse der Einspritzdüsenanordnung herum angeordnet sein. Darüber hinaus können die Einspritzdüsen so um die Mittelachse der Einspritzdüsenanordnung angeordnet sein, dass jeweils in Umfangsrichtung eine erste Einspritzdüse neben einer zweiten Einspritzdüse angeordnet ist. Die ersten Einspritzdüsen und die zweiten Einspritzdüsen können also einander abwechselnd bzw. benachbart angeordnet sein. Weiterhin können die Einspritzdüsen so um die Mittelachse der Einspritzdüsenanordnung angeordnet sein, dass jeweils in Umfangsrichtung bezüglich der Mittelachse der Einspritzdüsenanordnung eine Anzahl erster Einspritzdüsen neben einer Anzahl zweiter Einspritzdüsen angeordnet ist.

Mindestens eine erste Einspritzdüse und/oder mindestens eine zweite Einspritzdüse kann darüber hinaus eine Einspritzöffnung umfassen, die eine Drallzahl zwischen 0,8 und 3 des einzuspritzenden Brennstoffes ermöglicht.

Die erfindungsgemäße Verbrennungsmaschine umfaßt eine zuvor beschriebene Einspritzdüsenanordnung. Sie kann insbesondere einen Zylinder, eine Brennkammer und einen Kolben mit einer Mittelachse umfassen. Die Mittelachse des Kolbens kann dabei der Mittelachse der Einspritzdüsenanordnung entsprechen. Weiterhin kann der Kolben eine der Brennkammer zugewandte Deckfläche umfassen, wobei die Deckfläche des Kolbens einen Bereich umfassen kann, dessen Flächennormale einen Winkel zwischen 20° und 30° zur Mittelachse des Kolbens aufweist. Auf diese Weise kann der durch mindestens eine erste Einspritzdüse in die Brennkammer eingespritzte Brennstoff entlang der Deckfläche des Kolbens geleitet werden und durch einen weiteren Oberflächenbereich des Kolbens zur Mittelachse des Kolbens hin umgelenkt werden. Dies ermöglicht eine homogene Verteilung und gute Brennstoff-Luftdurchmischung des Brennstoffs.

Grundsätzlich kann es sich bei der erfindungsgemäßen Verbrennungsmaschine um einen Verbrennungsmotor, beispielsweise einen Dieselmotor, handeln. Zudem kann es sich bei der erfindungsgemäßen Verbrennungsmaschine um einen Kraftfahrzeugmotor handeln. Bei dem im Rahmen der vorliegenden Erfindung verwendeten Brennstoff kann es sich beispielsweise um Dieselkraftstoff handeln.

Um eine Kraftstoffverbrennung bei lokal niedriger Temperatur (LTC) zu ermöglichen, sollte der Motor Abgasrückführungsraten von bis zu 60 % unterstützen, eine niedrige Ansaugtemperatur ermöglichen und über fortgeschrittene Steuer- und Regelungsmechanismen verfügen. Die im Rahmen der vorliegenden Erfindung verwendete Brennkammer ist vorteilhafterweise so gestaltet, dass sie für eine LTC-Verbrennung geeignet ist ohne jedoch einen konventionellen Teil- und Vollastbetrieb zu beeinträchtigen.

Vorliegend wird die erweiterte Einsatzmöglichkeit für eine LTC-Verbrennung durch die Kombination von Wandgeführter Einspritzung (wall-guided injection) und Strahlgeführter (spray-guided) Brennstoffverteilung erzielt. Die Wandgeführte Einspritzung führt zu geringer Wirbelbildung während der anfänglichen Einspritzphase und erweitert die Wechselwirkung zwischen dem beispielsweise gasförmigen Brennstoff und der Brennkammerwand. Hierbei wird die Durchmischung zwischen Brennstoff und Luft zunächst reduziert und eine Kühlung des Brennstoff/Brennstoff-Luft-Gemisches erreicht. Die genannten Effekte erhöhen die erforderliche Zeit für die Durchmischung und Homogenisierung zusätzlich zu den bereits bekannten Methoden der Reduzierung der Ansaugtemperatur und der Erhöhung des Abgasrückführungsverhältnisses.

Nach der erfolgten Durchmischung entlang der Brennkammeroberfläche bewirkt eine entsprechende Form der Brennkammer, beispielsweise eine entsprechende Krümmung zur Mittelachse hin, die komplette Durchmischung und die Verbrennung. Im LTC-Betriebszustand und bei Teillastbetrieb dominiert der Wall-Guidance-Effekt, also die Durchmischung durch ein Injizieren des Brennstoffes auf eine Brennkammerwand. Dabei kann im LTC-Betriebszustand eine hohe Abgasrückführung und niedrige Zufuhrtemperaturen realisiert werden. Bei höheren Lasten unterstützt die Brennkammerform eine schnelle und vollständige Durchmischung zur Erzielung eines hohen Wirkungsgrades und von niedrigen Abgastemperaturen. Bei hohen Lasten und hohen Motorgeschwindigkeiten zeigt das Wall-Guided-System Durchmischungsdefizite und Ruß-Oxidationsprobleme, wobei jedoch der Strahlgeführte Anteil (Spray-Guided-Anteil) des eingespritzten Brennstoffes in Kombination mit einem Einspritzen des Brennstoffes entlang der Brennkammerwand (Wall-Guided-Anteil) angewendet werden kann.

Grundsätzlich kann also das erfindungsgemäße Verfahren und die erfindungsgemäße Verbrennungsmaschine bzw. die erfindungsgemäße Einspritzdüsenanordnung entweder im konventionellen Betriebszustand oder in einem kombinierten Betriebszustand aus konventionellem Betriebszustand und LTC-Betriebszustand betrieben werden. Demgegenüber weisen die derzeit bekannten Verbrennungssysteme nur sehr beschränkte LTC-Betriebsmöglichkeiten auf und sind daher nur sehr eingeschränkt in der Lage den Stickoxidausstoß und den Rußausstoß zu reduzieren. Demgegenüber ermöglicht die vorliegende Erfindung eine Kombination der Vorteile von Wall-Guided- und Spray-Guided-Dieselverbrennungssystemen.

Weitere Merkmale, Eigenschaften und Vorteile der vorliegenden Erfindung werden im Folgenden anhand eines Ausführungsbeispiels unter Bezugnahme auf die beigefügten Figuren näher beschrieben. Grundsätzlich sind die im Rahmen der vorliegenden Erfindung beschriebenen Merkmale sowohl einzeln als auch in verschiedenen Kombinationen miteinander vorteilhaft, auch wenn nicht jede mögliche Kombination einzeln explizit genannt ist.

Figur 1    zeigt schematisch einen Schnitt durch einen Teil einer erfindungsgemäßen Verbrennungsmaschine.

Figur 2    zeigt schematisch eine erfindungsgemäße Einspritzanordnung.

Figur 3    zeigt schematisch einen Schnitt durch einen Teil einer erfindungsgemäßen Verbrennungsmaschine, wobei das Einspritzen des ersten Anteils Brennstoff gezeigt ist.

Figur 4 zeigt schematisch einen Schnitt durch einen Teil einer erfindungsgemäßen Verbrennungsmaschine, wobei das Einspritzen des zweiten Anteils des Brennstoffes gezeigt ist.

Figur 5 zeigt schematisch eine Draufsicht auf einen Kolben einer erfindungsgemäßen Verbrennungsmaschine während des Einspritzens des Kraftstoffes.

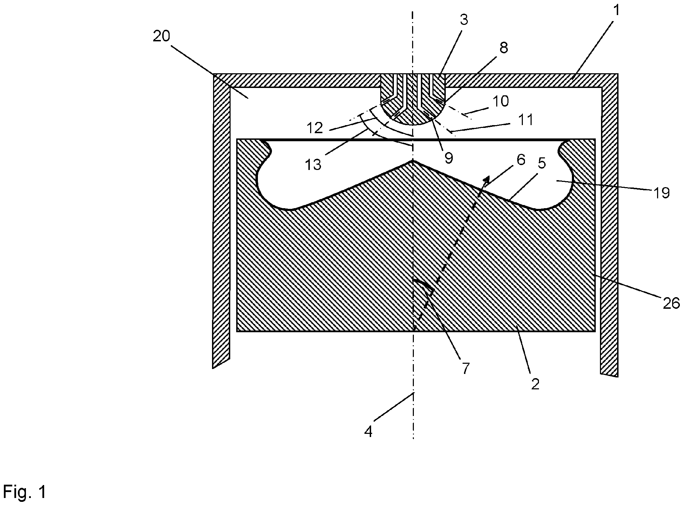

Die Erfindung wird im Folgenden anhand eines Ausführungsbeispiels unter Bezugnahme auf die Figuren 1 bis 5 näher erläutert. Die Figur 1 zeigt schematisch einen Schnitt durch einen Teil einer erfindungsgemäßen Verbrennungsmaschine, bei der es sich beispielsweise um einen Dieselmotor für ein Kraftfahrzeug handeln kann. Die Verbrennungsmaschine umfaßt einen Zylinder 1 und einen Kolben 2. Der Kolben 2 ist zumindest teilweise innerhalb des Zylinders 1 angeordnet.

Der Zylinder 1 umfaßt eine Mittelachse 4. Er hat die Form eines Hohlzylinders. Der Zylinder 1 umfaßt weiterhin eine Einspritzdüsenanordnung 3, die im Bereich der Mittelachse 4 angeordnet ist. Die Einspritzdüsenanordnung 3 umfaßt ebenfalls eine Mittelachse, die im vorliegenden Ausführungsbeispiel mit der Mittelachse 4 des Zylinders 1 identisch ist.

Die Einspritzdüsenanordnung 3 umfaßt eine Anzahl erster Einspritzöffnungen 9 und eine Anzahl zweiter Einspritzöffnungen 8. Die ersten Einspritzöffnungen 9 umfassen jeweils eine Mittelachse 11, die in einem Winkel 13 zur Mittelachse 4 des Zylinders 1 bzw. der Einspritzdüsenanordnung 3 angeordnet sind. Die zweiten Einspritzdüsenöffnungen 8 umfassen jeweils eine Mittelachse 10, die in einem Winkel 12 zur Mittelachse 4 des Zylinders 1 bzw. der Einspritzdüsenanordnung 3 angeordnet sind. Der Winkel 13 zwischen der Mittelachse 11 einer ersten Einspritzdüsenöffnung 9 beträgt dabei zwischen 55° und 69°, vorzugsweise zwischen 60° und 65°. Der Winkel 12 zwischen einer Mittelachse 10 einer zweiten Einspritzdüsenöffnung 8 beträgt dabei zwischen 70° und 85°, vorzugsweise zwischen 70° und 80°. In der Figur 1 sind die ersten Einspritzdüsenöffnungen 8 in Bezug auf die Mittelachse 4 radial innerhalb der zweiten Einspritzdüsenöffnung 8 angeordnet.

Bei der Durchführung des erfindungsgemäßen Verfahrens wird ein erster Anteil Brennstoff, beispielsweise Dieselkraftstoff, durch die ersten Einspritzdüsenöffnungen 9 in den Brennraum 20 eingespritzt. Gleichzeitig wird ein zweiter Anteil Brennstoff, beispielsweise Dieselkraftstoff, durch die zweiten Einspritzdüsenöffnungen 8 in die Brennkammer 20 eingedüst. Dabei wird der erste Anteil Brennstoff in einem Winkel zwischen 55° und 69°, vorzugsweise zwischen 60° und 65° zur Mittelachse 4 in die Brennkammer 20 eingespritzt, während der zweite Anteil Brennstoff in einen Winkel zwischen 70° und 85°, vorzugsweise zwischen 70° und 80° zur Mittelachse 4 in die Brennkammer 20 eingespritzt.

Der Kolben 2 hat eine zylindrische Form, wobei die Oberseite 5 des Kolbens 2 innerhalb des Zylinders 1 angeordnet ist. Dabei wird zwischen der inneren Oberfläche des Zylinders 1 und der Oberseite 5 des Kolbens 2 eine Brennkammer 20 ausgebildet. Vorteilhafterweise ist die Oberseite 5 des Kolbens 2 zumindest teilweise mit einer Vertiefung 19 ausgestattet. Vorteilhafterweise umfaßt die Vertiefung 19 in der Kolbendeckfläche 5 einen Oberflächenbereich mit einer Flächennormale 6, wobei die Flächennormale 6 einen Winkel 7 zur Mittelachse 4 aufweist. Der Kolben 2 umfaßt ebenfalls eine Mittelachse, die mit der Mittelachse 4 des Zylinders 1 identisch ist. Vorteilhafterweise beträgt der Winkel 7 zwischen der Flächennormale 6 und der Mittelachse 4 zwischen 20° und 30°. Auf diese Weise wird der durch die ersten Einspritzdüsenöffnungen 9 in die Brennkammer 20 eingespritzte Brennstoff nahezu parallel zu dem Oberflächenbereich mit der Oberflächennormale 6 eingespritzt und an der Oberfläche 5 entlang geführt.

Der Oberflächenbereich mit der Flächennormale 6 ist vorteilhafterweise zwischen der Mittelachse 4 und mindestens der Hälfte des Radius des Kolbens 2 angeordnet. In der Figur 1 befindet sich zudem zwischen der Hälfte des Radius des Kolbens 2 und der Mantelfläche 26 des Kolbens 2 eine Krümmung der Oberfläche der Deckfläche 5 des Kolbens zur Mittelachse 4 hin.

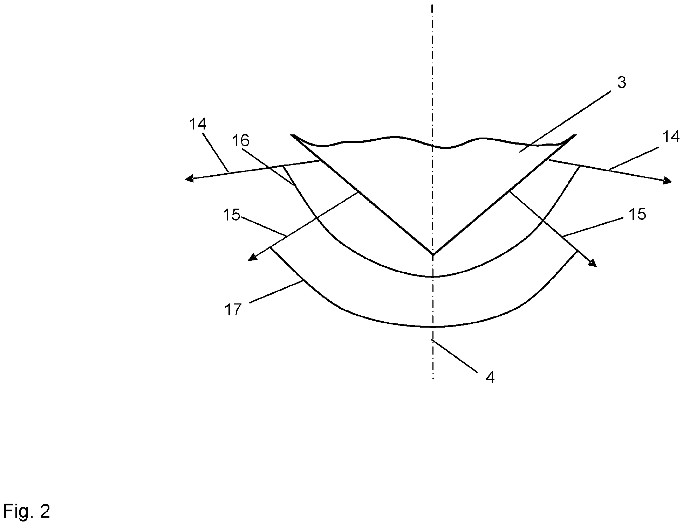

Die Figur 2 zeigt schematisch eine Einspritzdüsenanordnung 3. Die Einspritzdüsenanordnung 3 weist eine Mittelachse 4 auf. Eine Anzahl erster Einspritzdüsenöffnungen und eine Anzahl zweiter Einspritzdüsenöffnungen sind ringförmig um die Mittelachse 4 herum angeordnet. Durch die ersten Einspritzdüsenöffnungen wird Kraftstoff in der durch Pfeile 15 dargestellten Einspritzrichtung in die Brennkammer eingedüst, wobei zwischen einander gegenüberliegenden Einspritzdüsenöffnungen ein Sprühwinkel 17 zwischen 120° und 135° des ersten Anteils Brennstoff erzeugt wird. Durch die zweiten Einspritzdüsenöffnungen kann ein zweiter Anteil Kraftstoff in der durch Pfeile 14 gekennzeichneten Einspritzrichtung in die Brennkammer 20 eingespritzt werden. Dabei kann zwischen einander gegenüberliegenden Einspritzdüsenöffnungen ein Sprühwinkel 16 zwischen 140° und 160° des zweiten Anteils Kraftstoff erzeugt werden. Im Falle einer hinreichenden Anzahl erster Einspritzdüsenöffnungen bzw. zweiter Einspritzdüsenöffnungen kann der erste Anteil Brennstoff in Form eines Kegels mit einem Öffnungswinkel zwischen 120° und 135° erzeugt werden bzw. der zweite Anteil Brennstoff kann in Form eines Kegels mit einem Öffnungswinkel zwischen 140° und 160° in die Brennkammer eingespritzt werden.

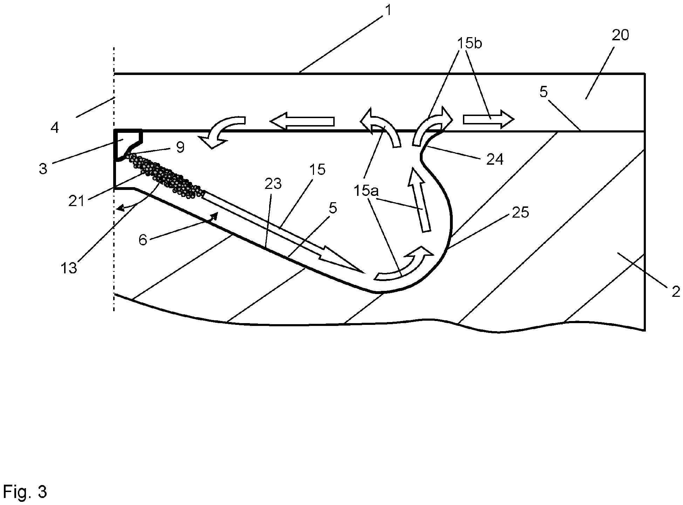

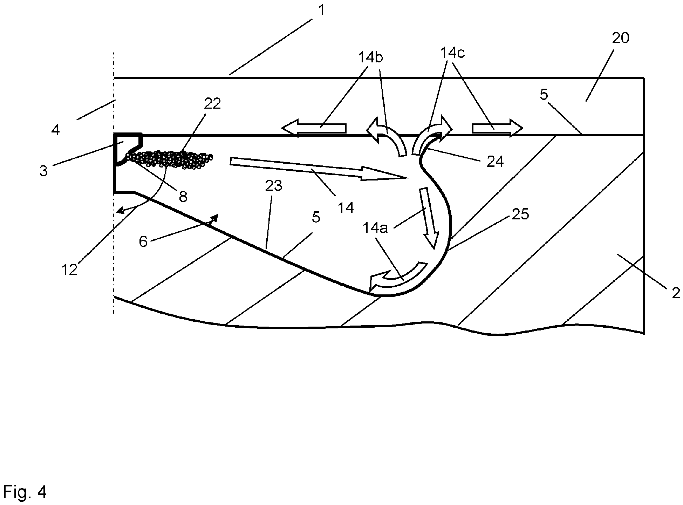

Eine weitere Ausführungsvariante wird im Folgenden anhand der Figuren 3 bis 5 näher erläutert. Die Figur 3 zeigt schematisch einen Schnitt durch eine erfindungsgemäße Verbrennungsmaschine im Bereich einer ersten Einspritzdüsenöffnung 9. Die Figur 4 zeigt schematisch einen Schnitt durch einen Teil einer erfindungsgemäßen Verbrennungsmaschine im Bereich einer zweiten Einspritzdüsenöffnung 8. In den Figuren 3 und 4 sind die Einspritzdüsenöffnungen 8 und 9 abweichend von dem in den Figuren 1 und 2 gezeigten Beispiel so angeordnet, dass die ersten Einspritzdüsenöffnungen 9 und die zweiten Einspritzdüsenöffnungen 8 denselben radialen Abstand zur Mittelachse 4 aufweisen. Zudem wechseln sich jeweils eine erste Einspritzdüsenöffnung 9 und eine zweite Einspritzdüsenöffnung 8 entlang einer Umfangsfläche der Einspritzdüsenanordnung 3 ab.

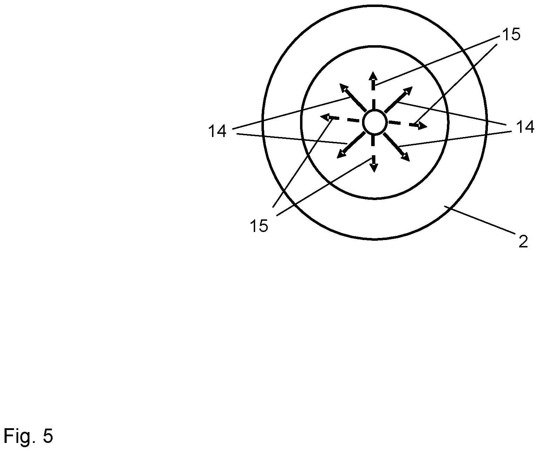

Die Einspritzrichtungen der auf diese Weise in die Brennkammer eingespritzten Brennstoffanteile sind schematisch in der Figur 5 gezeigt. Dabei zeigt die Figur 5 eine Draufsicht auf den Kolben 2. Die Einspritzrichtungen des ersten Anteils Brennstoff, welcher durch die ersten Einspritzdüsenöffnungen 9 in die Brennkammer 20 eingespritzt wird, sind durch Pfeile 15 gekennzeichnet. Die Einspritzrichtungen des zweiten Anteils Brennstoff, der durch die zweiten Einspritzdüsenöffnungen 8 in die Brennkammer 20 eingespritzt wird, sind durch Pfeile 14 gekennzeichnet. Erste Brennstoffanteile und zweite Brennstoffanteile wechseln sich, wie in der Figur 5 schematisch gezeigt, in Umfangsrichtung des Kolbens 2 bzw. in Umfangsrichtung der Einspritzdüsenanordnung 3 ab.

Die Deckfläche 5 des Kolbens 2 umfaßt einen Oberflächenanteil 23, der die Form einer Kegelfläche mit einer Flächennormale 6, wie im Zusammenhang mit der Figur 1 bereits beschrieben, aufweist. An diesen Oberflächenanteil 23 schließt sich ein konkav in Bezug auf die Mittelachse 4 gekrümmter Oberflächenbereich 25 an. An den Oberflächenanteil 25 schließt sich wiederum ein konvex zur Mittelachse 4 hin gekrümmter Oberflächenanteil 24 an.

Ein erster Anteil Brennstoff 21, beispielsweise Dieselkraftstoff, wird, wie in der Figur 3 schematisch gezeigt, durch eine Einspritzdüsenöffnung 9 in die Brennkammer 20 in Richtung 15, also in einem Winkel 13 zur Mittelachse 4 zwischen 55° und 69°, vorteilhafterweise zwischen 60° und 65°, eingespritzt. Dabei wird der erste Brennstoffanteil 21 zunächst entlang der Oberfläche 5 des Kolbens 2 und anschließend entlang einer entsprechenden Krümmung 25 der Kolbendeckfläche 5 zur Mittelachse 4 hin zurückgeleitet. Dies ist in der Figur 3 durch Pfeile 15a gekennzeichnet. Auf diese Weise wird eine teilweise Zirkulation des ersten Anteils Brennstoff 21 in der Brennkammer 20 bewirkt. Ein zweiter Anteil des Kraftstoffes 21 breitet sich in durch Pfeile gekennzeichnete Richtung 15b radial entlang der Kolbendeckfläche 5 in der Brennkammer 20 aus.

In der Figur 4 wird ein zweiter Anteil Kraftstoff 22, beispielsweise Dieselkraftstoff, durch eine zweite Einspritzdüsenöffnung 8 in die Brennkammer 20 in Richtung 14, also in einem Winkel 12 zwischen 70° und 85° zur Mittelachse 4, vorteilhafterweise zwischen 70° und 80°, in die Brennkammer 20 eingespritzt. Dabei bewirkt das Einspritzen des zweiten Brennstoffanteils 22 in Einspritzrichtung 14, dass der Brennstoff auf einen konvex zur Mittelachse 4 hin gekrümmten Oberflächenanteil 24 der Deckfläche des Kolbens aufprallt. Ein Teil des Brennstoffes 22 wird anschließend entlang des konkav zur Mittelachse 4 hin gekrümmten Oberflächenanteils 25 der Deckfläche des Kolbens in Richtung 14a zur Mittelachse 4 hin zurückgeleitet. Ein zweiter Anteil des Kraftstoffes 22 wird in Richtung 14b ebenfalls in Richtung der Mittelachse 4 zurückgeleitet, während sich ein dritter Anteil des Brennstoffes 22 in Richtung 14c radial von der Mittelachse 4 entfernt und entlang der Oberfläche des Kolbens 2 weiter ausbreitet. Durch die Strömung des Kraftstoffes in den Richtungen 14a und 14b werden eine Zirkulation und dabei gleichzeitig eine Durchmischung des Kraftstoffes mit der in der Brennkammer 20 befindlichen Luft erreicht.

## Patentansprüche

1. Verfahren zum Einspritzen von Kraftstoff (21, 22) in eine Brennkammer (20) einer Verbrennungsmaschine, welche einen Kolben (2) und einen Zylinder (1) mit einer Mittelachse (4) umfaßt, wobei der Zylinder (1) eine Einspritzdüsenanordnung (3) mit einer Mittelachse (4), die der Mittelachse (4) des Zylinders (1) entspricht, umfaßt und die Einspritzdüsenanordnung (3) mindestens eine erste Einspritzdüse (9) und mindestens eine zweite Einspritzdüse (8) umfaßt,
   **dadurch gekennzeichnet, dass**
   ein erster Anteil Brennstoff (21) durch die erste Einspritzdüse (9) in die Brennkammer (20) in einer Einspritzrichtung (15) eingespritzt wird, die einen Winkel zwischen 55° und 69° zur Mittelachse (4) der Einspritzdüsenanordnung (3) aufweist, und gleichzeitig ein zweiter Anteil Brennstoff (22) durch die zweite Einspritzdüse (8) in die Brennkammer (20) in einer Einspritzrichtung (14) eingespritzt wird, die einen Winkel (13) zwischen 70° und 85° zur Mittelachse (4) der Einspritzdüsenanordnung (3) aufweist.

2. Verfahren nach Anspruch 1,
   **dadurch gekennzeichnet, dass**
   der erste Anteil Brennstoff (21) durch die erste Einspritzdüse (9) in die Brennkammer (20) in einer Einspritzrichtung (15) eingespritzt wird, die einen Winkel (13) zwischen 60° und 65° zur Mittelachse (4) der Einspritzdüsenanordnung (3) aufweist, und gleichzeitig der zweite Anteil (22) Brennstoff durch die zweite Einspritzdüse (8) in die Brennkammer (20) in einer Einspritzrichtung (14) eingespritzt wird, die einen Winkel (12) zwischen 70° und 80° zur Mittelachse (4) der Einspritzdüsenanordnung (3) aufweist.

3. Verfahren nach Anspruch 1 oder Anspruch 2,
   **dadurch gekennzeichnet, dass**
   der erste Anteil Brennstoff (21) durch mindestens zwei erste Einspritzdüsen (9) in die Brennkammer (20) eingespritzt wird, wobei die zwei ersten Einspritzdüsen (9) in Bezug auf die Mittelachse (4) der Einspritzdüsenanordnung (3) einander derart gegenüber angeordnet sind, dass zwischen ihnen ein Einspritzwinkel (17) zwischen 110° und 139° erzielt wird, und gleichzeitig der zweite Anteil Brennstoff (22) durch mindestens zwei zweite Einspritzdüsen (8) in die Brennkammer (20) eingespritzt wird, wobei die zwei zweiten Einspritzdüsen (8) in Bezug auf die Mittelachse (4) der Einspritzdüsenanordnung (3) einander derart gegenüber angeordnet sind, dass zwischen ihnen ein Einspritzwinkel (16) zwischen 140° und 170° erzielt wird.

4. Verfahren nach einem der Ansprüche 1 bis 3, **dadurch gekennzeichnet, dass** der erste Anteil Brennstoff (21) und/oder der zweite Anteil Brennstoff (22) mit einer Drallzahl zwischen 0,8 und 3 in die Brennkammer (20) eingespritzt wird.

5. Verfahren nach einem der Ansprüche 1 bis 4, **dadurch gekennzeichnet, dass** der erste Anteil Brennstoff (21) und/oder der zweite Anteil Brennstoff (22) bei einem Verdichtungsverhältnis der Brennkammer zwischen 13 und 16 in die Brennkammer (20) eingespritzt wird.

6. Verfahren nach einem der Ansprüche 1 bis 5, **dadurch gekennzeichnet, dass** der erste Anteil Brennstoff (21) und/oder der zweite Anteil Brennstoff (22) durch eine Anzahl von Einspritzöffnungen (8, 9), die entlang einer gedachten Kreislinie um die Mittelachse (4) der Einspritzdüsenanordnung (3) angeordnet sind, in die Brennkammer (20) eingespritzt wird.

7. Verfahren nach einem der Ansprüche 1 bis 6, **dadurch gekennzeichnet, dass** der erste Anteil des Brennstoffes (21) durch zwischen 5 und 10 erste Düsenöffnungen (9) in die Brennkammer (20) eingespritzt wird und/oder der zweite Anteil des Brennstoffes (22) durch zwischen 5 und 10 zweite Düsenöffnungen (8) in die Brennkammer (20) eingespritzt wird.

8. Einspritzdüsenanordnung (3) zur Durchführung des Verfahrens nach einem der Ansprüche 1 bis 7, welche eine Mittelachse (4) umfaßt, **dadurch gekennzeichnet, dass** die Einspritzdüsenanordnung (3) mindestens eine erste Einspritzdüse (9) mit einer Mittelachse (11), die in einem Winkel (13) zwischen 55° und 69° zur Mittelachse (4) der Einspritzdüsenanordnung (3) angeordnet ist, und mindestens eine zweite Einspritzdüse (8) mit einer Mittelachse (10), die in einem Winkel (12) zwischen 70° und 85° zur Mittelachse (4) der Einspritzdüsenanordnung (3) angeordnet ist, umfaßt.

9. Einspritzdüsenanordnung (3) nach Anspruch 8, **dadurch gekennzeichnet, dass** die Einspritzdüsenanordnung (3) mindestens eine erste Einspritzdüse (9) mit einer Mittelachse (11), die in einem Winkel (13) zwischen 60° und 65° zur Mittelachse (4) der Einspritzdüsenanordnung (3) einschließt, und mindestens eine zweite Einspritzdüse (8) mit einer Mittelachse (10), die in einem Winkel (12) zwischen 70° und 80° zur Mittelachse (4) der Einspritzdüsenanordnung (3) einschließt, umfaßt.

10. Einspritzdüsenanordnung (3) nach Anspruch 8 oder Anspruch 9, **dadurch gekennzeichnet, dass** eine Anzahl erster Einspritzdüsen (9) und/oder eine Anzahl zweiter Einspritzdüsen (8) gleichmäßig um die Mittelachse (4) der Einspritzdüsenanordnung (3) herum angeordnet sind.

11. Einspritzdüsenanordnung (3) nach einem der Ansprüche 8 bis 10, **dadurch gekennzeichnet, dass** die Einspritzdüsen (8, 9) so um die Mittelachse (4) der Einspritzdüsenanordnung (3) angeordnet sind, dass jeweils in Umfangsrichtung eine erste Einspritzdüse (9) neben einer zweiten Einspritzdüse (8) angeordnet ist.

12. Einspritzdüsenanordnung (3) nach einem der Ansprüche 8 bis 10, **dadurch gekennzeichnet, dass** die Einspritzdüsen (8, 9) so um die Mittelachse (4) der Einspritzdüsenanordnung (3) angeordnet sind, dass jeweils in Umfangsrichtung eine Anzahl erster Einspritzdüsen (9) neben einer Anzahl zweiter Einspritzdüsen (8) angeordnet ist.

13. Einspritzdüsenanordnung (3) nach einem der Ansprüche 8 bis 12, **dadurch gekennzeichnet, dass** mindestens eine erste Einspritzdüse (9) und/oder mindestens eine zweite Einspritzdüse (8) eine Einspritzöffnung umfaßt, die eine Drallzahl zwischen 0,8 und 3 des einzuspritzenden Brennstoffes ermöglicht.

14. Verbrennungsmaschine, der eine Einspritzdüsenanordnung (3) nach einem der Ansprüche 8 bis 12 umfaßt.

15. Verbrennungsmaschine nach Anspruch 14, der einen Zylinder (1), eine Brennkammer (20) und einen Kolben (2) mit einer Mittelachse (4), die der Mittelachse (4) der Einspritzdüsenanordnung (3) entspricht, und einer der Brennkammer (20) zugewandet Deckfläche (5) umfaßt, **dadurch gekennzeichnet, dass** die Deckfläche (5) des Kolbens (2) einen Bereich (23) umfaßt, dessen Flächennormale (6) einen Winkel zwischen 20° und 30° zur Mittelachse (4) des Kolbens (2) aufweist.

**Geänderte Patentansprüche gemäss Regel 137(2) EPÜ.**

**1.** Verfahren zum Einspritzen von Kraftstoff (21, 22) in eine Brennkammer (20) einer Verbrennungsmaschine, welche einen Kolben (2) und einen Zylinder (1) mit einer Mittelachse (4) umfaßt, wobei der Zylinder (1) eine Einspritzdüsenanordnung (3) mit einer Mittelachse (4), die der Mittelachse (4) des Zylinders (1) entspricht, umfaßt und die Einspritzdüsenanordnung (3) mindestens eine erste Einspritzdüse (9) und mindestens eine zweite Einspritzdüse (8) umfaßt, wobei ein erster Anteil Brennstoff (21) durch die erste Einspritzdüse (9) in die Brennkammer (20) in einer Einspritzrichtung (15) eingespritzt wird, die einen Winkel zwischen 55° und 69° zur Mittelachse (4) der Einspritzdüsenanordnung (3) aufweist, und gleichzeitig ein zweiter Anteil Brennstoff (22) durch die zweite Einspritzdüse (8) in die Brennkammer (20) in einer Einspritzrichtung (14) eingespritzt wird, die einen Winkel (13) zwischen 70° und 85° zur Mittelachse (4) der Einspritzdüsenanordnung (3) aufweist, **dadurch gekennzeichnet, dass** der erste Anteil Brennstoff (21) und der zweite Anteil Brennstoff (22) durch eine Anzahl von Einspritzöffnungen (8, 9), die entlang einer gedachten Kreislinie um die Mittelachse (4) der Einspritzdüsenanordnung (3) angeordnet sind, in die Brennkammer (20) eingespritzt wird.

**2.** Verfahren nach Anspruch 1, **dadurch gekennzeichnet, dass** der erste Anteil Brennstoff (21) durch die erste Einspritzdüse (9) in die Brennkammer (20) in einer Einspritzrichtung (15) eingespritzt wird, die einen Winkel (13) zwischen 60° und 65° zur Mittelachse (4) der Einspritzdüsenanordnung (3) aufweist, und gleichzeitig der zweite Anteil (22) Brennstoff durch die zweite Einspritzdüse (8) in die Brennkammer (20) in einer Einspritzrichtung (14) eingespritzt wird, die einen Winkel (12) zwischen 70° und 80° zur Mittelachse (4) der Einspritzdüsenanordnung (3) aufweist.

**3.** Verfahren nach Anspruch 1 oder Anspruch 2, **dadurch gekennzeichnet, dass** der erste Anteil Brennstoff (21) durch mindestens zwei erste Einspritzdüsen (9) in die Brennkammer (20) eingespritzt wird, wobei die zwei ersten Einspritzdüsen (9) in Bezug auf die Mittelachse (4) der Einspritzdüsenanordnung (3) einander derart gegenüber angeordnet sind, dass zwischen ihnen ein Einspritzwinkel (17) zwischen 110° und 139° erzielt wird, und gleichzeitig der zweite Anteil Brennstoff (22) durch mindestens zwei zweite Einspritzdüsen (8) in die Brennkammer (20) eingespritzt wird, wobei die zwei zweiten Einspritzdüsen (8) in Bezug auf die Mittelachse (4) der Einspritzdüsenanordnung (3) einander derart gegenüber angeordnet sind, dass zwischen ihnen ein Einspritzwinkel (16) zwischen 140° und 170° erzielt wird.

**4.** Verfahren nach einem der Ansprüche 1 bis 3, **dadurch gekennzeichnet, dass** der erste Anteil Brennstoff (21) und/oder der zweite Anteil Brennstoff (22) mit einer Drallzahl zwischen 0,8 und 3 in die Brennkammer (20) eingespritzt wird.

**5.** Verfahren nach einem der Ansprüche 1 bis 4, **dadurch gekennzeichnet, dass** der erste Anteil Brennstoff (21) und/oder der zweite Anteil Brennstoff (22) bei einem Verdichtungsverhältnis der Brennkammer zwischen 13 und 16 in die Brennkammer (20) eingespritzt wird.

**6.** Verfahren nach einem der Ansprüche 1 bis 5, **dadurch gekennzeichnet, dass** der erste Anteil des Brennstoffes (21) durch zwischen 5 und 10 erste Düsenöffnungen (9) in die Brennkammer (20) eingespritzt wird und/oder der zweite Anteil des Brennstoffes (22) durch zwischen 5 und 10 zweite Düsenöffnungen (8) in die Brennkammer (20) eingespritzt wird.

**7.** Einspritzdüsenanordnung (3) zur Durchführung des Verfahrens nach einem der Ansprüche 1 bis 6, welche eine Mittelachse (4) umfaßt, wobei die Einspritzdüsenanordnung (3) mindestens eine erste Einspritzdüse (9) mit einer Mittelachse (11), die in einem Winkel (13) zwischen 55° und 69° zur Mittelachse (4) der Einspritzdüsenanordnung (3) angeordnet ist, und mindestens eine zweite Einspritzdüse (8) mit einer Mittelachse (10), die in einem Winkel (12) zwischen 70° und 85° zur Mittelachse (4) der Einspritzdüsenanordnung (3) angeordnet ist, umfaßt, **dadurch gekennzeichnet, dass** eine Anzahl erster Einspritzdüsen (9) und eine Anzahl zweiter Einspritzdüsen (8) entlang einer gedachten Kreislinie um die Mittelachse (4) der Einspritzdüsenanordnung (3) angeordnet sind.

**8.** Einspritzdüsenanordnung (3) nach Anspruch 7, **dadurch gekennzeichnet, dass** die Einspritzdüsenanordnung (3) mindestens eine erste Einspritzdüse (9) mit einer Mittelachse (11), die in einem Winkel (13) zwischen 60° und 65° zur Mittelachse (4) der Einspritzdüsenanordnung (3) einschließt, und mindestens eine zweite Einspritzdüse (8) mit einer Mittelachse (10), die in einem Winkel (12) zwischen 70° und 80° zur Mittelachse (4) der Einspritzdüsenanordnung (3) einschließt, umfaßt.

**9.** Einspritzdüsenanordnung (3) nach Anspruch 7 oder Anspruch 8,
**dadurch gekennzeichnet, dass**
eine Anzahl erster Einspritzdüsen (9) und/oder eine Anzahl zweiter Einspritzdüsen (8) gleichmäßig um die Mittelachse (4) der Einspritzdüsenanordnung (3) herum angeordnet sind.

**10.** Einspritzdüsenanordnung (3) nach einem der Ansprüche 7 bis 9,
**dadurch gekennzeichnet, dass**
die Einspritzdüsen (8, 9) so um die Mittelachse (4) der Einspritzdüsenanordnung (3) angeordnet sind, dass jeweils in Umfangsrichtung eine erste Einspritzdüse (9) neben einer zweiten Einspritzdüse (8) angeordnet ist.

**11.** Einspritzdüsenanordnung (3) nach einem der Ansprüche 7 bis 9,
**dadurch gekennzeichnet, dass**
die Einspritzdüsen (8, 9) so um die Mittelachse (4) der Einspritzdüsenanordnung (3) angeordnet sind, dass jeweils in Umfangsrichtung eine Anzahl erster Einspritzdüsen (9) neben einer Anzahl zweiter Einspritzdüsen (8) angeordnet ist.

**12.** Einspritzdüsenanordnung (3) nach einem der Ansprüche 7 bis 11,
**dadurch gekennzeichnet, dass**
mindestens eine erste Einspritzdüse (9) und/oder mindestens eine zweite Einspritzdüse (8) eine Einspritzöffnung umfaßt, die eine Drallzahl zwischen 0,8 und 3 des einzuspritzenden Brennstoffes ermöglicht.

**13.** Verbrennungsmaschine, der eine Einspritzdüsenanordnung (3) nach einem der Ansprüche 7 bis 11 umfaßt.

**14.** Verbrennungsmaschine nach Anspruch 13, der einen Zylinder (1), eine Brennkammer (20) und einen Kolben (2) mit einer Mittelachse (4), die der Mittelachse (4) der Einspritzdüsenanordnung (3) entspricht, und einer der Brennkammer (20) zugewandet Deckfläche (5) umfaßt,
**dadurch gekennzeichnet, dass**
die Deckfläche (5) des Kolbens (2) einen Bereich (23) umfaßt, dessen Flächennormale (6) einen Winkel zwischen 20° und 30° zur Mittelachse (4) des Kolbens (2) aufweist.

Fig. 1

Fig. 2

Fig. 3

Fig. 4

Fig. 5

Europäisches
Patentamt

European
Patent Office

Office européen
des brevets

# EUROPÄISCHER RECHERCHENBERICHT

Nummer der Anmeldung

EP 12 15 1229

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 469 193 A1 (YANMAR CO LTD [JP]) 20. Oktober 2004 (2004-10-20) * Absatz [0043]; Abbildungen 2-5 * ----- | 1-15 | INV. F02M61/18 F02M45/08 F02B23/06 |
| X | WO 2005/078270 A1 (PEUGEOT CITROEN AUTOMOBILES SA [FR]; GAUTIER GUILLAUME [FR]; BEN DAKHL) 25. August 2005 (2005-08-25) * Seite 8, Zeile 5 - Seite 10, Zeile 32; Abbildungen 1-5 * ----- | 1-15 | |
| X | WO 2005/001255 A1 (DAIMLER CHRYSLER AG [DE]; BLESSING MATTHIAS [DE]; BRAUN HARALD [DE]; K) 6. Januar 2005 (2005-01-06) * Seite 9, Zeile 1 - Seite 11, Zeile 19; Abbildungen 2,4,5,8 * ----- | 1-15 | |
| X | WO 2009/067495 A2 (HOU DEYANG [US]) 28. Mai 2009 (2009-05-28) * Anspruch 9; Abbildungen 1,2 * ----- | 1-15 | RECHERCHIERTE SACHGEBIETE (IPC) F02M F02B |

Der vorliegende Recherchenbericht wurde für alle Patentansprüche erstellt

| Recherchenort | Abschlußdatum der Recherche | Prüfer |
|---|---|---|
| München | 4. Mai 2012 | Kolland, Ulrich |

**EP 2 615 296 A1**

ANHANG ZUM EUROPÄISCHEN RECHERCHENBERICHT
ÜBER DIE EUROPÄISCHE PATENTANMELDUNG NR.

EP 12 15 1229

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-05-2012

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1469193 | A1 | 20-10-2004 | CN | 1615399 | A | 11-05-2005 |
| | | | DE | 60225072 | T2 | 12-02-2009 |
| | | | DK | 1469193 | T3 | 05-05-2008 |
| | | | EP | 1469193 | A1 | 20-10-2004 |
| | | | JP | 2003214297 | A | 30-07-2003 |
| | | | US | 2005120995 | A1 | 09-06-2005 |
| | | | WO | 03062631 | A1 | 31-07-2003 |
| WO 2005078270 | A1 | 25-08-2005 | EP | 1714023 | A1 | 25-10-2006 |
| | | | FR | 2866393 | A1 | 19-08-2005 |
| | | | WO | 2005078270 | A1 | 25-08-2005 |
| WO 2005001255 | A1 | 06-01-2005 | DE | 10329524 | A1 | 27-01-2005 |
| | | | EP | 1639242 | A1 | 29-03-2006 |
| | | | JP | 2009513855 | A | 02-04-2009 |
| | | | US | 2006243242 | A1 | 02-11-2006 |
| | | | WO | 2005001255 | A1 | 06-01-2005 |
| WO 2009067495 | A2 | 28-05-2009 | KEINE | | | |

EPO FORM P0461

Für nähere Einzelheiten zu diesem Anhang : siehe Amtsblatt des Europäischen Patentamts, Nr.12/82

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0071886 A1